# EUROPÄISCHE PATENTSCHRIFT

(11) **EP 1 417 159 B1**
(45) Veröffentlichungstag und Bekanntmachung des Hinweises auf die Patenterteilung: **17.11.2010**
(21) Anmeldenummer: 02794791.0
(22) Anmeldetag: 14.08.2002
(51) Int. Cl.: C03C 19/00, C03C 23/00, C03C 10/14, G21K 1/06

(54) **SUBSTRATMATERIAL FÜR RÖNTGENOPTISCHE KOMPONENTEN**
SUBSTRATE MATERIAL FOR X-RAY OPTICAL COMPONENTS
SUBSTRAT POUR COMPOSANTS OPTIQUES SOUMIS A DES RAYONS X

(30) Priorität: 16.08.2001 DE 10139188
(43) Veröffentlichungstag der Anmeldung: 12.05.2004
(73) Patentinhaber: Schott AG, 55122 Mainz (DE); Carl Zeiss SMT AG, 73447 Oberkochen (DE)
(72) Erfinder: DINGER, Udo, 73447 Oberkochen (DE); EISERT, Frank, 73431 Aalen (DE); WEISER, Martin, 74889 Sinsheim (DE); KNAPP, Konrad, 55126 Mainz (DE); MITRA, Ina, 55271 Stadecken-Elsheim (DE); MORIAN, Hans, 65388 Schlangenbad (DE)
(74) Vertreter: Sawodny, Michael-Wolfgang
(86) Internationale Anmeldenummer: PCT/EP2002/009107
(87) Internationale Veröffentlichungsnummer: WO 2003/016233

(56) Entgegenhaltungen:
- EP-A- 0 955 565
- WO-A-02/099818
- DE-A- 19 830 449
- US-A- 5 070 045
- US-A- 5 591 682
- DINGER U ET AL: "Mirror substrates for EUV lithography: progress in metrology and optical fabrication technology" SOFT X-RAY AND EUV IMAGING SYSTEMS, SAN DIEGO, CA, USA, 3-4 AUG. 2000, Bd. 4146, Seiten 35-46, XP008012781 Proceedings of the SPIE - The International Society for Optical Engineering, 2000, SPIE-Int. Soc. Opt. Eng, USA ISSN: 0277-786X
- TONG W M ET AL: "Mask substrate requirements and development for extreme ultraviolet lithography (EUVL)" 19TH ANNUAL SYMPOSIUM ON PHOTOMASK TECHNOLOGY, MONTEREY, CA, USA, 15-17 SEPT. 1999, Bd. 3873, pt.1-2, Seiten 421-428, XP000991487 Proceedings of the SPIE - The International Society for Optical Engineering, 1999, SPIE-Int. Soc. Opt. Eng, USA ISSN: 0277-786X
- MCKEOWN P A ET AL: "Experiences in the precision machining of grazing incidence X-ray mirror substrates" LARGE OPTICS TECHNOLOGY, SAN DIEGO, CA, USA, 19-21 AUG. 1985, Bd. 571, Seiten 42-50, XP008012782 Proceedings of the SPIE - The International Society for Optical Engineering, 1986, USA ISSN: 0277-786X

## Beschreibung

Die Erfindung betrifft ein Substratmaterial für röntgenoptische Komponenten, umfassend eine Glaskeramik mit einer Wärmeausdehnung |α| in einem vorbestimmten Temperaturbereich < 5 x 10⁻⁶ K⁻¹, ein Verfahren zur Herstellung eines derartigen Substratmaterials sowie die Verwendung eines derartigen Substratmaterials.

Röntgenoptische Komponenten sind insbesondere im Bereich der Röntgenlithographie von besonderem Interesse. Insbesondere gilt dies für die Lithographie mit weichen Röntgenstrahlen, die sogenannten EUV-Lithographien im Wellenlängenbereich 10 - 30 nm. Als optische Komponenten finden im Bereich der Röntgenstrahlen Spiegel mit einer möglichst hohen Reflektivität im Röntgenbereich Verwendung. Derartige Röntgenspiegel können nahe dem senkrechten Einfall betrieben werden oder im streifenden Einfall, als sogenannte normal oder grazing incidence-Spiegel.

Röntgenspiegel, umfassen ein Substrat und darauf aufgebaut ein Vielfachschichtsystem, sogenannte "Distributed Bragg Reflectors" (DBR), nachfolgend auch kurz Multilayer genannt. Sie erlauben die Realisierung von Spiegeln mit hoher Reflektivität im Röntgenbereich bei nicht streifendem Einfall, d. h. im normal incidence Betrieb.

Röntgenspiegel, die nahe dem senkrechtem Einfall (normal incidence) betrieben werden, werden den mit einfacheren Schichten belegten Spiegeln mit streifendem Einfall (grazing incidence) immer dann vorgezogen, wenn hohe Abbildungsgüte durch geringe Aberrationen, d.h. vorzugsweise in abbildenden Systemen, z.B. Projektionsoptiken für EUV-Lithographie-Systeme, gefordert sind.

Um die Reflektivität von grazing incidence Spiegeln zu erhöhen, können auch die Substrate dieser Spiegel mit einem Vielfachschichtsystem versehen werden.

Betreffend Projektionsoptiken für die EUV-Lithographie und die dort verwandten röntgenoptischen Komponenten wird auf die DE 199 23 609 A1 sowie die US-Anmeldung Serial-No. 09/322,813, eingereicht beim US-Patentamt am 28.05.1999 mit dem Titel "Reduction objective for extreme ultraviolet lithography" verwiesen, deren Offenbarungsgehalt vollumfänglich in die vorliegende Anmeldung mit aufgenommen wird.

Als auf das Substrat aufbauende Vielfachschichtsysteme können Schichtsysteme, umfassend Mo/Si, Mo/Be, MoRu/Be-Schichtstapeln mit 40 bis 100 Schichtpaaren verwendet werden. Derartige Systeme führen im EUV-Bereich λ_{R} = 10 bis 30 nm zu Spitzenreflektivitäten im Bereich von 70 bis 80 %. Je nach Wellenlänge des zu reflektierenden Lichtes können auch Schichtsysteme aus anderen Materialien zum Einsatz gelangen.

Die hohe Reflektivität der Schichtstapel wird durch phasengerechte Überlagerung und konstruktive Interferenz der an den einzelnen Schichten reflektierten Teilwellenfronten erreicht. Die Schichtdicken müssen dabei typischerweise im Bereich kleiner 0,1 nm kontrolliert werden.

Notwendige Voraussetzungen für das Erreichen hoher Reflektivität sind hinreichend geringe Schicht- und Substratrauheiten im high spatial frequency roughness-(HSFR)-Bereich. Dieser Ortsfrequenzbereich führt je nach Sichtweise zu Lichtverlust durch Streuung außerhalb des Bildfeldes der Optik bzw. durch Störung der mikroskopisch phasenrichtigen Überlagerung der Teilwellenzüge. Der relevante Ortsfrequenzbereich ist nach unten hin durch das Kriterium Streuung außerhalb des Bildfeldes begrenzt und liegt anwendungsabhängig typischerweise bei EUV-Wellenlängen im Bereich einiger µm. Zu hohen Ortsfrequenzen hin wird i.a. keine Grenze spezifiziert. Ein sinnvoller Grenzwert liegt beispielsweise im Bereich der halben Wellenlänge des einfallenden Lichtes, da noch höhere Ortsfrequenzen von den einfallenden Photonen nicht mehr gesehen werden. Die HSFR wird üblicherweise mit Atomic Force-Mikroskopen (AFM) vermessen, die die notwendige laterale Auflösung besitzen.

Betreffend die Definition HSFR, MSFR, Feinpasse, die in nachfolgender Anmeldung verwandt wird, wird auf U.Dinger, F.Eisert, H.Lasser, M.Mayer, A.Seifert, G.Seitz, S.Stacklies, F.J.Stiegel, M.Weiser, Mirror Substrates for EUV-lithography: progress in metrology and optical fabrication technology, Proc.SPIE Vol.4146, 2000 verwiesen, dessen Offenbarungsgehalt vollumfänglich in die vorliegende Anmeldung mitaufgenommen wird.

Der Feinpassebereich gemäß obiger Publikation reicht vom optischen freien Durchmesser, d.h. der Apertur des Spiegels bis auf 1 mm Rauhheitswellenlänge. MSFR umfasst die Rauheitswellenlängen von 1mm bis 1µm. Der HSFR-Bereich umfasst Rauheitswellenlängen von 1 µm bis 10 nm.

Auch andere röntgenoptische Komponenten können einen Aufbau erfordern, der sich durch eine hohe Reflektivität und eine geringe Wärmeausdehnung auszeichnet. Nur beispielhalber sei eine Retikelmaske für ein EUV-Projektionsbelichtungssystem, ein Spiegel mit Rasterelementen, ein sogenannter optischer Integrator oder ein Kollektorspiegel eines EUV-Beleuchtungssystems erwähnt. Betreffend Beleuchtungssysteme für die EUV-Lithographie und die dort eingesetzten Komponenten wird auf die DE 199 03 807 A1 sowie die US-Anmeldung Serial-No. 09/305,017, eingereicht beim US-Patentamt am 04.05.1999 mit dem Titel "Illumination system particularly for EUV-Lithography" verwiesen, deren Offenbarungsgehalt vollumfänglich in die vorliegende Anmeldung mitaufgenommen wird.

Als Substratmaterialien für die darauf aufbauenden Vielfachschichtsysteme werden derzeit kristallines Silizium, amorphe und teilkristalline Gläser, wie die Glaskeramik ZERODUR® von Schott-Glas, Mainz verwendet.

Im Bereich der high spatial frequency roughness (HSFR) kann ein ausreichender Wert von beispielsweise 0,1 nm rms mit klassischem Superpolierverfahren sowohl auf Silizium als auch auf ZERODUR® und amorphen Gläsern erreicht werden. Da diese Verfahren zumindest auf Asphären i.a. die Feinpasse, d.h. Fehler im niedrigen Ortsfrequenzbereich und im mid spatial frequency roughness (MSFR)-Bereich die langwelligen MSFR-Anteile wieder verschlechtern, muß dem Superpolierprozeß in der Regel ein rauheitserhaltender Feinkorrekturprozeß nachgeschaltet werden.

Passe und auch die langwelligen MSFR-Anteile (mm-Wellen) können mit Strahlbearbeitungsverfahren, z.B. dem IBF (ion beam figuring) in Spezifikation gebracht werden. Der Vorteil dieser Verfahren ist, daß deren Werkzeuge sich insbesondere bei den typischerweise asphärischen Oberflächen formtreu anschmiegen können. Diese Strahlbearbeitungsverfahren beruhen auf Sputterprozessen. Die globalen und lokalen Sputterraten hängen dabei von den physikalischen und chemischen Bindungsverhältnissen im zu bearbeitenden Festkörper ab.

Während in einkristallinem Silizium der zusätzliche Energieeintrag durch die einfallenden Ionen zu einer Oberflächenumorientierung mit dem Resultat verbesserter Rauhheiten führt, wird im amorphen Glas eine leichte Verschlechterung der HSFR von ca. 0,06 nach 0,15 nm rms, in der teilkristallinen Glaskeramik, wie beispielsweise ZERODUR® mit einer Kristallitgröße größer 50 nm dagegen eine dramatische Verschlechterung von 0,1 nach 0,4 nm rms beobachtet.

Glaskeramiken mit einer Kristallitgröße der Hochquarz-Mischkristalle ≥ 80 nm und einem mittleren thermischen Längsausdehnungskoeffizienten α_{20°C-700°C} < 0,5 · 10⁻⁶/K sind aus der DE 199 07 038 A1 bekannt geworden.

Hitzebeständige Keramiken mit einer mittleren Oberflächenrauheit ≤ 0,03 µm zeigt die JP-A-04-367538. Hier sind jedoch keine Angaben zur mittleren thermischen Ausdehnung gemacht. Des weiteren sind keine Angabe gemacht, in welchem Ortsfrequenzbereich diese Rauheitswerte erreicht werden.

Das einkristalline Silizium ist zwar unter dem Gesichtspunkt der Rauhigkeitsanforderungen an das Substratmaterial ein geeigneter Träger, weist jedoch eine mechanische Anisotropie auf und erlaubt aufgrund der Einkristallität nur geringe Spiegelgrößen. Der Nachteil eines gegenüber Gläsern höheren Wärmeausdehnungskoeffizienten α läßt sich zwar durch die deutlich höhere Wärmeleitfähigkeit und eine geeignete Kühlung teilweise kompensieren. Dies ist jedoch technisch sehr aufwendig. Silizium als Substrat kommt daher derzeit lediglich bei sehr hohen thermischen Lasten beispielsweise in Beleuchtungssystemen zum Einsatz.

Bei Verwendung von amorphen Gläsern mit geringer Wärmeausdehnung beispielsweise Gläsern wie in der US 2,326,059 beschrieben sind zwar Wärmeausdehnung und die Rauheit im HSFR-Bereich unproblematisch, eine ausreichende Passe und MSFR-Werte können aber nicht erreicht werden, da die lamellenartige Schlierenstruktur von amorphem Glas mit verschwindend geringer Wärmeausdehnung sich nachteilig in diesen Frequenzbereichen auswirkt. So führen diese ca. 0,1 mm dicken Schichten auf moderat gekrümmten Spiegeloberflächen zu nicht korrigierbaren Oberflächemodulationen im mm-Bereich mit Amplituden von einigen Nanometern, weit außerhalb für die EUVL-Lithographie notwendigen Werten. Dieser Effekt wird auch bei ionenstrahlbasierten Fertigungsprozessen beobachtet.

Die teilkristalline Glaskeramik Zerodur® mit Kristallitgrößen größer 50 nm weist zwar den gewünschten niedrigen Wärmeausdehnungskoeffizienten auf, nach dem abschließenden Strahlbearbeitungsverfahren jedoch zu große Rauheitswerte im HSFR-Bereich.

Die Bearbeitung von Oberflächen von Substraten, die für die Mikrolithograhpie mit Wellenlängen im Bereich 10 bis 30 nm geeignet sind sowie die Charakteristika derartiger Substrate sind in den nachfolgenden Entgegenhaltungen DINGER U ET AL: "Mirror substrates for EUV lithography: progress in metrology and optical fabrication technology" SOFT X-RAY AND EUV IMAGING SYSTEMS, SAN DIEGO, CA, USA, 3-4 AUG. 2000, Bd. 4146, Seiten 35-46, XP008012781 Proceedings of the SPIE - The International Society for Optical Engineering, 2000, SPIE-Int. Soc. Opt. Eng, USA ISSN: 0277-786X
TONG W M ET AL: "Mask substrate requirements and development for extreme ultraviolet lithography (EUVL)" 19TH ANNUAL SYMPOSIUM ON PHOTOMASK TECHNOLOGY, MONTEREY, CA, USA, 15-17 SEPT. 1999, Bd. 3873, pt. 1-2, Seiten 421-428, XP000991487 Proceedings of the SPIE - The International Society for Optical Engineering, 1999, SPIE-Int. Soc. Opt. Eng, USA ISSN: 0277-786X
MCKEOWN P A ET AL: "Experiences in the precision machining of grazing incidience X-ray mirror substrates" LARGE OPTICS TECHNOLOGY, SAN DIEGO, CA, USA, 19-21 AUG. 1985, Bd. 571, Seiten 42-50, XP008012782 Proceedings of the SPIE - The International Society for Optical Engineering, 1986, USA ISSN: 0277-786X beschrieben.

Aufgabe der Erfindung ist es, ein Substratmaterial für röntgenoptische Komponenten anzugeben, das einen niedrigen Wärmeausdehnungskoeffizient wie beispielsweise Gläser aufweist, andererseits aber eine ausreichende Oberflächengüte, der röntgenoptischen Komponenten nach den notwendigen Oberflächenbearbeitungsschritten gewährleistet.

Die Aufgabe der Erfindung wird durch eine Glaskeramik als Substratmaterial für röntgenoptische Komponenten mit einem amorphen und einem kristallinen Glasanteil gelöst. Die Glaskeramik weist einen niedrigen Wärmeausdehnungskoeffizienten auf, die Größe der Mikrokristallite ist ≤ 38 nm, bevorzugt < 20 nm, besonders bevorzugt < 10 nm und das erfindungsgemäße Substratmaterial verfügt nach einer Oberflächenbearbeitung, insbesondere einem ion beam figuring (IBF) noch über eine Rauhigkeit im HSFR-Bereich, die < λ_{R}/30 rms, bevorzugt < λ_{R}/50 rms, insbesondere bevorzugt < λ_{R}/100 rms ist.

Die Erfinder haben überraschenderweise festgestellt, daß bestimmte Glaskeramikmaterialien sämtliche Anforderungen betreffend Wärmeausdehnung und Oberflächeneigenschaften erfüllen. Derartige Materialien sind in nachfolgender Tabelle 1 angegeben.

**Tabelle 1: Glaskeramiken und Rauhigkeit**

| Glaskeramik | Krist.-Größe | HSFR vor Strahlbearbeitung | HSFR nach Strahlbearbeitung |
|---|---|---|---|
| CLEARCERAM Z ^{®} (Fa. Ohara) | 38 nm | 0,13 nm | 0,24 nm |
| | | | |
| KERALITE ^{®} (Fa. Eurokera) | 35 nm | 0,10 nm | 0,23 nm |

Die Materialien weisen eine Kristallitgröße von 35 nm (KERALITE ^{®} der Firma Eurokera) bzw. 38 nm (CLEARCERAM Z ^{®} der Firma Ohara) auf. Die HSFR, d.h. die Rauheit im Rauheitswellenlängenbereich von 1 µm bis 10 nm beträgt vor der Strahlbearbeitung 0,13 nm und nach der Strahlbearbeitung 0,24 nm (CLEARCERAM Z ^{®} ) bzw. 0,10 nm vor der Strahlbearbeitung und 0,23 nm nach der Strahlbearbeitung (KERALITE ^{®}). Betreffend die Zusammensetzung von CLEARCERAM Z ^{®} der Fa. Ohara wird auf die US 5,591,682 verwiesen, betreffend die Zusammensetzung von KERALITE ^{®} der Firma Eurokera auf die US 5,070,045, deren Offenbarungsgehalt vollumfänglich in die vorliegende Anmeldung mitaufgenommen wird.

Ein normal incidence Röntgenspiegel mit einem erfindungsgemäßen Substratmaterial für die EUV-Lithographie zeichnet sich durch eine gute Feinpasse, d.h. Fehler im niedrigen Ortsfrequenzbereich, aus. Hierunter versteht man typischerweise Strukturgrößen zwischen einem Zehntel der durch die einzelnen Bildpunkten zugeordneten Bündelquerschnitten bis zum freien Durchmesser des Spiegels, d.h. die Fehler liegen in der Größenordnung Millimeter bis mehrere Dezimeter. Derartige Fehler führen zu Aberrationen und reduzieren die Abbildungstreue bzw. beschränken die Auflösungsgrenze des Systems. Mit den erfindungsgemäßen Komponenten können in Feinpasse-Werte im Bereich λ_{R}/50 bis λ_{R}/100 rms; im EUV-Bereich, d.h. bei Wellenlängen von 10 - 30 nm, entspricht dies 0,1 - 0,2 nm rms für 10 nm Wellenlänge und 0,3 - 0,6 nm rms für 30 nm Wellenlänge. , erreicht werden.

Ferner zeichnen sie sich durch geringe Rauhheiten im mittleren Ortsfrequenzbereich (MSFR) aus. Diese Ortswellenlängen führen zu Streulicht innerhalb des Bildfeldes (Flare) und damit zu Kontrastverlusten in einer abbildenden Optik. Die Fehler im MSFR-Bereich lassen sich aus den Formeln für TIS (total integrated scatter) abschätzen. Mit der Erfindung können bei EUVL-Anwendungen Fehler im Bereich 0,1 bis 0,2 nm rms erreicht werden.

Die normal incidence Röntgenspiegel sind auch durch eine geringe Wärmeausdehnung gekennzeichnet. Dies ist für EUV-Anwendungen wichtig, da ca. 30 % des einfallenden Lichtes von den Multilayerspiegeln absorbiert und in Wärme umgewandelt wird. Damit die Oberflächenform im Betrieb unter diesen thermischen Lasten stabil bleibt, wird bei abbildenden Optiken ein Material mit möglichst geringen Wärmeausdehnungskoeffizienten benötigt. Geringe Ausdehnungskoeffizienten kommen auch der erreichbaren Formgenauigkeit in wärmeerzeugenden Bearbeitungsprozessen entgegen.

Die Rauhigkeit der röntgenoptischen Komponente im High Spatial Frequency Roughness (HSFR)-Bereich ist < λ_{R}/30 rms, bevorzugt < λ_{R}/50 rms, insbesondere bevorzugt < λ_{R}/100 rms, gleichzeitig liegt der Fehler im niedrigen Ortsfrequenzbereich, das ist der Feinpassebereich, im Bereich λ_{R}/50 - λ_{R}/100 rms und die Rauhigkeit im mittleren Ortsfrequenzbereich (MSFR) liegt gleichzeitig im Bereich λ_{R}/50 - λ_{R}/100 rms. Bei einer EUV-Wellenlänge von 13 nm entspricht dies einer Rauhigkeit von 0,26 nm bis 0,13 nm. Der Vorteil des erfindungemäßen Substartmaterials liegt also darin, dass die Rauheitswerte in den verrschiedenen Frequenzbereichen (Feinpasse, MSFR, HSFR) im Bereich 0,26 nm bis 0,13 nm für EUV-Wellenlängen liegen.

In einer ersten Ausführungsform ist die die röntgenoptische Komponente eine in Reflektion betriebene Retikelmaske für die EUV-Lithographie umfassend ein erfindungsgemäßes Substratmaterial.

In einer alternativen Ausführungsform ist die röntgenoptische Komponente ein normal incidence Spiegel, wobei der Spiegel ein Substrat, umfassend eine Glaskeramik sowie ein Mehrschichtsystem mit einer Vielzahl von Schichten mit hoher Reflektivität im Röntgenbereich bei nicht-streifendem Einfall aufweist.

Bevorzugt umfaßt das auf das Substrat aufbauende Mehrschichtsystem des normal incidence Spiegels 40 bis 200 Schichtpaare, bestehend aus einem der nachfolgenden Materialien: Mo/Si, Mo/Bi, MoRu/Be.

Neben der Glaskeramik stellt die Erfindung auch ein Verfahren zur Herstellung einer röntgenoptischen Komponente für Röntgenstrahlen der Wellenlänge λ_{R} zur Verfügung, umfassend folgende Schritte: die Oberfläche der röntgenoptischen Komponente wird superpoliert bis eine High Spatial Frequency Roughness (HSFR) < λ_{R}/50 rms, bevorzugt < λ_{R}/100 rms erreicht wird, anschließend wird die Oberfläche mit einem Strahlbearbeitungsverfahren weiterbearbeitet, bis der Fehler im niedrigen Ortsfrequenzbereich λ_{R}/50 - λ_{R}/100 rms und der Fehler im mittleren Ortsfrequenzbereich (MSFR) im Bereich λ_{R}/50 - λ_{R}/100 rms liegt. Die erfindungsgemäßen Materialien zeichnen sich dadurch aus dass die HSFR nach der Strahlbearbeitung sich nicht wesentlich verschlechtert, sondern auch nach Abschluß dieses Bearbeitungsschrittes noch eine HSFR < λ_{R}/50 rms, bevorzugt < λ_{R}/100 rms erreicht wird.

Das Superpolieren von Proben ist dem Fachmann hinlänglich bekannt und superpolierte Proben können käuflich erworben werden

Betreffend die Strahlbearbeitungsmethode des ion-beam-figurings (IBF), d.h. der lonenstrahlbearbeitung wird auf L..Allen und H.W.Romig, "Demonstration of ion beam figuring process" in SPIE Vol.1333 (1990) 22; S.R.Wilson, D.W. Reicher, J.R. McNell, "Surface figuring using neutral ion beams", Advances in Fabrication and Meterology for Optics and large Optics, SPIE, Vol.966, Seiten 74-81, August 1988 sowie L.N. Allen und R..E.Keim, "An ion figuring system for large optic fabrication", Current developments in Optical Engineering and Comercial Optics, SPIE, Vol.1168, Seiten 33-50, August 1989 verwiesen, wobei der Offenbarungsgehalt dieser Schrift vollumfänglich in die vorliegende Anmeldung mitaufgenommen wird.

Bei der Oberflächenbearbeitung mit ion beam figuring (IBF) wird ein Ar ⁺ - Strahl im Vakuum mittels eines 5-Achsenbewegungssystems kontrolliert über die Oberfläche des zu bearbeitenden Substrates geführt. Basierend auf einem z.B. mittels eines Interferometers gewonnen Oberflächenfehlerprofils wird die Verweilzeit des Bearbeitungsstrahls ortsabhängig und computergesteuert variiert. Die Abtragungsrate des Strahles ist dabei proportional zur Verweilzeit. Dadurch wird der Bearbeitungsprozeß definiert, der innerhalb der angegebenen Grenzen rasch konvergiert. Einzelheiten zu diesem Verfahren können der oben angegebenen Publikation entnommen werden.

Bei der erfindungsgemäßen Glaskeramiksubstratmaterialien sind Mikrokristallite mit negativer Wärmeausdehnung in amorphes Material mit positiver Wärmeausdehnung eingebettet. Während der Kristallisationsphase wird das stöchiometrische Verhältnis von Kristall- zu Glasphase so eingestellt, daß für einen bestimmten Temperaturbereich, beispielsweise 0 bis 50° C, eine verschwindende Wärmeausdehnung resultiert. Die Größe der Kristalite ist dabei ein freier Parameter. Die Erfinder haben erkannt, daß es für die Erzielung einer verschwindenden Wärmeausdehnung in erster Näherung irrelevant ist, ob viele kleine oder wenige große Kristallite eingebettet sind, solange das Volumenverhältnis Kristallit/Glas konstant bleibt.

Die erfindungsgemäßen Substratmaterialien weisen Kristallitgrößen in der Größenördnung der Wellenlänge des einfallenden Lichtes, bevorzugt unter der halben Wellenlänge, auf.

Die Erfinder haben erkannt, daß die durch Ionenbeschuß induziierten Rauheitsamplituden bzw. Degradationen mit der Kristallitgröße skalieren. Auf EUV-Spiegeln wird somit mit den erfindungsgemäßen Substratmaterialien nach der Oberflächenbearbeitung, insbesondere der Strahlbearbeitung eine tolerable Degradation erreicht, die um einen Faktor 3 bis 4 mal geringer ist als beispielsweise bei Glaskeramiken mit Mikrokristalliten in der Größenordnung von 50 nm.

Die erfindungsgemäßen Substratmaterialien weisen nach der Oberflächenbearbeitung Rauheiten in allen Ortsfrequenzen (HSFR, MSFR, Feinpasse) in einem Bereich auf, die durch die Röntgenphotonen nicht mehr wahrgenommen werden. Diese können daher nicht mehr zur Reflektivitätsminderung beitragen.

## Patentansprüche

1. Substratmaterial für röntgenoptische Komponenten für Röntgenstrahlen der Wellenlänge λ_{R} im Bereich 10 nm ≤ λ_{R} ≤ 30 nm umfassend:
eine Glaskeramik mit einer Glasphase aus amorphem Material und einer Kristallphase, umfassend Mikrokristallite, wobei das amorphe Material positive Wärmeausdehnung und die Mikrokristallite negative Wärmeausdehnung aufweisen und das stöchiometrische Verhältnis von Kristall- zu Glasphase derart eingestellt wird, daß der Betrag der Wärmeausdehnung α der Glaskeramik in einem Temperaturbereich von 20° C bis 100° C < 5 x 10⁻⁶ K⁻¹, insbesondere < 1 x 10⁻⁶ K⁻¹ ist, **dadurch gekennzeichnet, dass**
die mittlere Größe der Mikrokristallite ≤ 38 nm besonders bevorzugt < 20 nm, besonders bevorzugt < 10 nm ist und das Substratmaterial nach einer Oberflächenbearbeitung eine Rauhigkeit im High Spatial Frequency (HSFR)-Bereich < λ_{R}/30 rms, bevorzugt < λ_{R}/50 rms, insbesondere bevorzugt < λ_{R}/100 rms aufweist.

2. Substratmaterial gemäß Anspruche 1, **dadurch gekennzeichnet, dass** nach einer Oberflächenbearbeitung der Fehler im niedrigen Ortsfrequenzbereich im Bereich λ_{R}/50 - λ_{R}/100 rms liegt.

3. Substratmaterial gemäß einem der Ansprüche 1 bis 2, **dadurch gekennzeichnet, dass**
nach einer Oberflächenbearbeitung der Fehler im mittleren Ortsfrequenzbereich (MSFR) im Bereich λ_{R}/50 - λ_{R}/100 rms liegt.

4. Substratmaterial nach einem der Ansprüche 1 bis 3, **dadurch gekennzeichnet, dass**
bei der Oberflächenbearbeitung des Substratmaterials zunächst die Oberfläche der röntgenoptischen Komponente superpoliert und daran anschließend die Oberfläche mit einem Strahlbearbeitungsverfahren weiterbearbeitet wird.

5. Substratmaterial gemäß einem der Ansprüche 1 bis 4, **dadurch gekennzeichnet, dass**
das Substratmaterial ein Substratmaterial für eine Retikelmaske für die EUV-Lithographie ist.

6. Substratmaterial gemäß einem der Ansprüche 1 bis 4, **dadurch gekennzeichnet, dass**
das Substratmaterial ein Substratmaterial für einen normal incidence Spiegel ist, wobei auf das Substratmaterial ein Mehrschichtsystem mit einer Vielzahl von Schichten mit hoher Reflektivität im Röntgenbereich bei nicht-streifendem Einfall aufgebracht wird.

7. Substratmaterial gemäß Anspruch 6,
**dadurch gekennzeichnet, dass**
der Spiegel eine asphärische Form aufweist.

8. Substratmaterial gemäß Anspruch 6 oder 7, **dadurch gekennzeichnet, dass** auf das Substratmaterial ein Mehrschichtsystem umfassend 40 - 200 Schichtpaare bestehend aus einem der nachfolgenden Materialien
Mo/Si
Mo/Bi
MoRu/Be
aufgebracht wird.

9. Röntgenoptische Komponente, **dadurch gekennzeichnet, dass** sie ein Substratmaterial gemäß einem der Ansprüche 1 bis 8 umfasst.

10. Röntgenoptische Komponente gemäß Anspruch 9, **dadurch gekennzeichnet, dass** die röntgenoptische Komponente ein normal incidence Spiegel oder ein grazing incidence Spiegel ist.

11. Röntgenoptische Komponente gemäß Anspruch 9, **dadurch gekennzeichnet, dass** die röntgenoptische Komponente eine Retikelmaske ist.

12. Verfahren zur Herstellung eines Substratmaterials für eine röntgenoptische Komponente für Röntgenstrahlen der Wellenlänge λ_{R}, wobei das Substratmaterial eine Glaskeramik ist und das Verfahren folgende Schritte umfasst:
- die Oberfläche des Substratmaterials wird superpoliert bis eine High Spatial Frequency Roughness (HSFR ) < λ_{R}/30 rms, bevorzugt < λ_{R}/ 50 rms, besonders bevorzugt < λ_{R}/100 rms erreicht wird;
- anschließend wird die Oberfläche mit einem Strahlbearbeitungsverfahren weiterbearbeitet, bis der Fehler im niedrigen Ortsfrequenzbereich λ_{R}/50 - λ_{R}/100 rms und der Fehler im mittleren Ortsfrequenzbereich (MSFR) im Bereich λ_{R}/50 - λ_{R}/100 rms liegt wobei die High Spatrial Frequency Roughness (HSFR) < λ_{R}/30 rms, bevorzugt λ_{R}/50 rms, besonders bevorzugt < λ_{R}/100 rms erhalten wird.

13. Verwendung eines Substratmaterials für röntgenoptische Komponenten gemäß einem der Ansprüche 1 bis 11 in einem EUV-Projektionssystem umfassend ein Beleuchtungssystem und ein Projektionsobjektiv.

14. Verwendung eines Substratmaterials für röntgenoptische Komponente gemäß einem der Ansprüche 1 bis 11 in einem der nachfolgenden Gebiete:
der Röntgenmikroskopie
der Röntgenastronomie
der Röntgenspektroskopie.

## Claims

1. A substrate material for x-ray-optical components for x-ray radi ati on of the wavelength λ_{R} in the range 10 nm ≤ λ_{R} ≤ 30 nm comprising:
a gl ass ceramic havi ng a gl ass vase made of amorphous materi al and a crystal phase, comprising microcrystallites, the amorphous material having positive thermal expansion and the microcrystallites having negative thermal expansion and the stoichiometric ratio of crystal phase to glass phase being set in such a manner that the absolute value of the thermal expansion α of the glass ceramic in a temperature range from 20°C to 100°C is < 5 x 10⁻⁶ K⁻¹, in particular < 1 x 10⁻⁶ K⁻¹,
**characterized in that** the mean size of the microcrystallites is ≤ 38 nm, particularly preferably < 20 nm, very particularly preferably < 10 nm, and the substrate material has a high spatial frequency roughness (HSFR) range < λ_{R}/30 rms, preferably λ_{R}/50 rms, particularly preferably λ_{R}/100 rms, after surface processing.

2. The substrate material according to Claim 1, **characterized in that**, after surface processing, the low spatial frequency roughness is in the range λ_{R}/50 rms- λ_{R}/100 rms.

3. The substrate material according to one of Claims 1 to 2, **characterized in that**, after surface processing, the mi d spatial frequency roughness (M SFR) i s in the range λ_{R}/50 rms- λ_{R}/100 rms.

4. The substrate material according to one of Claims 1 to 3, **characterized in that,** duri ng the surface processi ng of the substrate material, firstly the surface of the x-ray-optical component is super-polished and the surface is subsequently processed further using a radiation processing method.

5. The substrate material according to one of Claims 1 to 4, **characterized in that** the substrate material is a substrate material for a reticle mask for EUV lithography.

6. The substrate material according to one of Claims 1 to 4, **characterized in that** the substrate material is a substrate material for a normal incidence mirror, a multi layer system having a plurality of layers having high reflectivity in the x-ray range in the event of non-glancing incidence being applied to the substrate material.

7. The substrate material according to Claim 6, **characterized in that** the mi rror has an aspheric shape.

8. The substrate material according to Claim 6 or 7, **characterized in that** a multilayer system comprising 40 - 200 layer pairs consisting of one of the following materials
Mo/Si
Mo/Bi
MoRu/Be
is applied to the substrate material.

9. An x-ray-optical component, **characterized in that** it comprises a substrate material according to one of Claims 1 to 8.

10. The x-ray-optical component according to Claim 9, **characterized in that** the x-ray-optical component is a normal incidence mi rror or a grazi ng incidence mi rror.

11. The x-ray-optical component according to Claim 9, **characterized in that** the x-ray-optical component is a reti d e mask.

12. A method for producing a substrate material for an x-ray-optical component for x-ray radiation of the wavelength λ_{R}, wherein the substrate material is a glass ceramic and the method comprises the following steps:
- the surface of the substrate material is super-polished until a high spatial frequency roughness (HSFR) < λ_{R}/30 rms, preferably λ_{R}/50 rms, particularly preferably λ_{R}/100 rms is achieved;
- the surface is subsequently further processed using a radiation processing method until the low spatial frequency roughness range is λ_{R}/50 rms- λ_{R}/100 rms and the mid local frequency roughness (MSFR) is in the range λ_{R}/50 rms- λ_{R}/100 rms, the high spatial frequency roughness (HSFR) < λ_{R}/30 rms, preferably λ_{R}/50 rms, particularly preferably λ_{R}/100 rms being maintained.

13. A use of a substrate material for x-ray-optical components according to one of Claims 1 to 11 in an EUV projection system comprising an illumination system and a projection objective.

14. A use of a substrate material for x-ray-optical components according to one of Claims 1 to 11 in oneof the following fields:
x-ray microscopy
x-ray astronomy
x-ray spectroscopy.

## Revendications

1. Matériau de substrat pour composants optiques pour rayons X pour des rayons X d'une longueur d'onde λ_{R} située dans la plage de 10 nm ≤ λ_{R} ≤ 30 nm, comprenant :
une vitrocéramique ayant une phase vitreuse faite de matériau amorphe et une phase cristalline contenant des microcristallites, le matériau amorphe ayant une dilatation thermique positive et les microcristallites une dilatation thermique négative et la proportion stoechiométrique des phases cristalline et vitreuse étant ajustée de telle façon que l'ampleur de la dilatation thermique α de la vitrocéramique soit, dans une plage de températures de 20°C à 100°C, de C < 5 × 10⁻⁶ K⁻¹, en particulier < 1 × 10⁻⁶ K⁻¹,
**caractérisé en ce que** la taille moyenne des microcristallites est de ≤ 38 nm et de préférence de < 20 nm, en particulier de < 10 nm et **en ce que** le matériau de substrat présente, après un traitement de surface, une rugosité dans la plage des hautes fréquences spatiales (HSFR) de < λ_{R}/ 30 rms, de préférence < λ_{R}/50 rms, en particulier < λ_{R}/100 rms.

2. Matériau de substrat selon la revendication 1, **caractérisé en ce qu'**après un traitement de surface, l'erreur dans la plage de basses fréquences spatiales est comprise entre λ_{R}/50 et λ_{R}/100 rms.

3. Matériau de substrat selon l'une des revendications 1 à 2, **caractérisé en ce qu'**après un traitement de surface, l'erreur dans la plage de moyennes fréquences spatiales (MSFR) est comprise entre λ_{R}/50 et λ_{R}/100 rms.

4. Matériau de substrat selon l'une des revendications 1 à 3, **caractérisé en ce que** lors du traitement de surface du matériau de substrat, la surface du composant optique pour rayons X est d'abord superpolie, puis le traitement de la surface est poursuivi par un procédé de traitement par irradiation.

5. Matériau de substrat selon l'une des revendications 1 à 4, **caractérisé en ce que** le matériau de substrat est un matériau de substrat pour un masque à réticule pour la lithographie EUV.

6. Matériau de substrat selon l'une des revendications 1 à 4, **caractérisé en ce que** le matériau de substrat est un matériau de substrat pour un miroir à incidence normale, dans lequel un système multicouche comprenant une pluralité de couches de forte réflectivité dans la plage des rayons X en incidence non rasante est appliqué sur le matériau de substrat.

7. Matériau de substrat selon la revendication 6, **caractérisé en ce que** le miroir présente une forme asphérique.

8. Matériau de substrat selon la revendication 6 ou 7, **caractérisé en ce qu'**un système multicouche comprenant 40 à 200 paires de couches composées des matériaux suivants :
Mo/Si
Mo/Bi
MoRu/Be
est appliqué sur le matériau de substrat.

9. Composant optique pour rayons X, **caractérisé en ce qu'**il comprend un matériau de substrat selon l'une des revendications 1 à 8.

10. Composant optique pour rayons X selon la revendication 9, **caractérisé en ce que** le composant optique pour rayons X est un miroir à incidence normale ou un miroir à incidence rasante.

11. Composant optique pour rayons X selon la revendication 9, **caractérisé en ce que** le composant optique pour rayons X est un masque de réticule.

12. Procédé pour la fabrication d'un matériau de substrat pour un composant optique pour rayons X pour les rayons X de la plage de longueur d'ondes λ_{R}, dans lequel le matériau de substrat est une vitrocéramique et le procédé comprend les étapes suivantes :
- la surface du matériau de substrat est superpolie jusqu'à atteindre une rugosité dans la plage de hautes fréquences spatiales (HSFR) de < λ_{R}/30 rms, de préférence < λ_{R}/50 rms, en particulier < λ_{R}/100 rms ;
- le traitement de la surface est ensuite poursuivi avec un procédé de traitement par irradiation, jusqu'à ce que l'erreur dans la plage des basses fréquences spatiales soit comprise entre λ_{R}/50 et λ_{R}/100 rms et l'erreur dans la plage des moyennes fréquences spatiales (MSFR) entre λ_{R}/50 et λ_{R}/100 rms, la rugosité dans les hautes fréquences spatiales (HSFR) de < λ_{R}/ 30 rms, de préférence < λ_{R}/50 rms, en particulier < λ_{R}/100 rms, étant conservée.

13. Utilisation d'un matériau de substrat pour composants optiques pour rayons X selon l'une des revendications 1 à 11 dans un système de projection à ultraviolets extrêmes comprenant un système d'éclairage et un objectif de projection.

14. Utilisation d'un matériau de substrat pour composants optiques pour rayons X selon l'une des revendications 1 à 11 dans l'un des domaines suivants :
microscopie aux rayons X,
astronomie aux rayons X,
spectroscopie aux rayons X.
